# EUROPEAN PATENT SPECIFICATION

(11) **EP 4 071 450 B1**
(45) Date of publication and mention of the grant of the patent: **28.02.2024**
(21) Application number: 21167236.5
(22) Date of filing: 07.04.2021
(51) Int. Cl.: G01L 1/26

(54) **LOAD CELL WITH A FORCE TRANSMITTING ELEMENT HELD BY A GEL ELEMENT**
WÄGEZELLE MIT EINEM DURCH EIN GELELEMENT GEHALTENEN KRAFTÜBERTRAGUNGSELEMENT
CELLULE DE CHARGE DOTÉE D'UN ÉLÉMENT DE TRANSMISSION DE FORCE MAINTENU PAR UN ÉLÉMENT DE GEL

(43) Date of publication of application: 12.10.2022
(73) Proprietor: TE Connectivity Solutions GmbH, 8200 Schaffhausen (CH)
(72) Inventor: RIVERA GUTIERREZ, Jose Luis, 2022 Bevaix (CH); BRUNNER, Ismael, 2022 Bevaix (CH); ARNOLD, Thomas, 2022 Bevaix (CH)
(74) Representative: Grünecker Patent- und Rechtsanwälte PartG mbB

(56) References cited:
- EP-A1- 1 739 401
- EP-A2- 0 440 011
- WO-A1-2004/072597

## Description

The invention relates to a load cell.

There is already a wide variety of different designs for load cells available that are capable of measuring the force and/or load accurately under some conditions. Still, there is a need for a load cell which performs exact measurements in an unclean environment that is subject to strong vibrations. Relevant state of the art force sensors are known from WO2004/072597A1 and EP0440011A2.

According to the invention, this need is met by a load cell as defined in claim 1.

This solution has the advantage that the gel element provides a vibration dampening connection between the force transmitting element and the opening. Thus, this connection has a low stiffness and thus reduces noise.

The gel element in the context of this text is an element that consists of or comprises a gel.

In the following, additional features are described, which further improve the above solution. Each of these features is advantageous on its own and may be arbitrarily combined with one or more of the other, remaining features.

For example, the gel element may be electrically conductive. This is useful if the force transmitting element needs to have the same electric potential as other elements of the load cell. For example, the force transmitting element may be grounded using an electrically conductive gel element. In other applications, the gel element may be an electric insulator, which insulates electrically the force transmitting element from those components of the loads that form the opening.

The force transmitting element is configured to transmit the force to the force sensing element. It is arranged to be accessible from outside the load cell so that the force may act upon it. It extends into the load cell to transmit the force to the force sensing element which is

The force transmitting element may be spherical, e.g. a ball or a sphere. This configuration allows for a small, almost point-like, contact surface between the force transmitting element and any device via which the force acts on the force transmitting element. Alternatively, the force transmitting element may be cylindrical, e.g. a pin or a cylinder. Such a design may be useful to decrease the load per unit area that the force acting on the force transmitting element exerts.

The force transmitting element may be made from metal, ceramics, or a combination thereof. This ensures low wear and a purely elastic deformation of the force transmitting element over a wide range of forces. The force transmitting element may also be made from a resin material, such as a fiber-enforced resin material.

In order to ensure a straight force flux from the point where the force to be measured acts on the force transmitting element, to the force sensing element, the opening is located opposite the force sensing element. The opening may be formed in a packaging that is part of the load cell.

The force sensing element may comprise a force transducer such as an MEMS device and/or a membrane. The force transducer may comprise a transducer packaging. The measurement signal may be at least one of digital and analog. It may be representative of the force, a load and/or a displacement.

According to another advantageous aspect, the gel element may line the opening, in particular provide a continuous lining of the opening. More particularly, the gel element may surround the force transmitting element preferably completely in a circumferential direction. A continuous lining of the opening provides a dampening effect in all directions.

According to another embodiment, the gel element and the force transmitting element may jointly seal the opening. Thus, dirt and fluids are prevented from reaching the force sensing element, and applicability of the load cell in dirty environments is improved.

In another embodiment, the gel element may seal the opening completely by itself vis-à-vis the force sensing element. This provides a continuous seal without any gaps, which may otherwise allow fluids to reach the force sensing element via capillary forces.

The gel element is a structural component of the load cell, i.e. the gel element is part of the load-bearing structure of the load cell. As a structural component, it accepts forces that are e.g. exerted from the force transmitting element towards a rim of the opening, and secures the structural integrity of the load cell. For example, the gel element may secure the force transmitting element in the load cell.

The vibrational damping effect of the gel element may be increased if, according to another advantageous embodiment, the gel element is arranged between the force transmitting element and the force sensing element. In this embodiment, the gel element forms a cushion between the force transmitting element and the force sensing element.

The gel element may at least partly, preferably completely, clad the force transmitting element in an area of the force transmitting element, which area is located between the opening and the force sensing element. This improves both the encapsulation of the force transmitting element from the exterior of the load cell and improves the vibrational damping of the force transmitting element.

The gel element may be a separate component included in the load cell as a unitary piece or be molded in place. The gel element may be bonded, such as chemically and/or physically bonded, to one or more components of the load cell. In one embodiment, the gel element may be formed as a membrane. The membrane may be a separate unitary, detachable body or may be formed by a layer, which is adhesive or bonded to other components of the load cell e.g. by being molded *in situ.*

According to another aspect, the gel element may comprise a bulge, wherein the force transmitting element is at least partly arranged and/or received in the bulge. In particular, the bulge may be part of a gel element that forms a membrane. The bulge lends further support and dampening to the force transmitting element. The bulge may comprise an opening through which the force transmitting element may be inserted into the bulge. The opening of the bulge may correspond to the opening into which the force transmitting element extends or through which it protrudes to be accessible from the exterior of the load cell. The bulge may surround and thus define a volume which is preferably completely separated from an interior space of the load cell, in which the bulge is located.

The gel element may comprise an opening, which may be coaxial to the opening in the packaging. If the gel element is formed as a membrane, the opening in the gel element may extend through the entire gel element.

The load cell, in particular its packaging, further an at least essentially rigid cover structure, wherein the opening extends through the cover structure. The cover structure lends rigidity to and/or prop, or support the gel element. The cover structure is arranged spaced apart and opposite the force sensing element. The cover structure may extend parallel to and spaced apart from the force sensing element.

In one embodiment, the cover structure may be a part of an essentially pot-like or bell-like cover.

The force sensing element is located in an interior space of the cover. The cover may be part of a packaging.

The force transmitting element is arranged in the interior space of the cover. The gel element may in particular be arranged on the cover structure at a front face of the cover structure, which front face faces away from the force sensing element, e.g. towards the exterior of the load cell. Alternatively or cumulatively, the gel element may be located at a rear surface of the cover structure. The rear surface may face the interior space. The gel element may be separate from or bonded to the cover structure. For example, the gel element may adhere to the cover structure. Such an adherence may result from at least one of a form fit, bonding, such as physical and/or chemical bonding, and gluing.

The opening in the cover structure may be lined by the gel element as described above. Thus, both the cover structure and the gel element may each provide an opening through which the force transmitting element extends. The opening in the cover structure may have a diameter that is at least one of larger than a diameter of the opening in the gel element and larger than a diameter of the force transmitting element. A large diameter of the opening in the cover structure facilitates assembly of the load cell, as the force transmitting element may be inserted into this opening after the packaging has been assembled and before the gel element is mounted. Fixation of the force transmitting element is then accomplished by mounting the gel element.

The gel element may adhere to at least one of the force transmitting element and the force sensing element, which improves structural integrity of the load cell.

According to another aspect, the force transmitting element is supported moveably relative to the force sensing element by the gel element. The mobility of the force transmitting element is preferably dimensioned to generate only elastic or reversible deformation of the gel element. In particular, the mobility of the force transmitting element may be limited to prevent plastic deformation of the gel element. For example, the gap between the cover structure and the force transmitting element, which gap is filled by the gel element, may be sized to allow only a reversible deformation of the gel element.

The load cell comprises an interior space, which, as mentioned above, may be provided by a pot-like or bell-like cover. The force transmitting element is arranged at least partly in the interior space. The gel extends from the opening in the packaging or the cover structure into the interior space. The gel element may, in another embodiment, extend from outside the interior space through the opening in the packaging or cover structure into the interior space.

The load cell may further comprise a substrate, which may be part of the packaging. The substrate may support, directly or indirectly, the force sensing element. The interior space may be arranged between the substrate and the cover structure. The substrate may be located opposite and spaced apart from the opening in the gel element and/or the packaging and/or the cover structure, with the force sensing element being located preferably between the substrate and the opening in the gel element and/or the packaging and/or the cover structure.

As the gel element may provide for a highly efficient seal of the interior space, it may be preferred that the load cell comprises a vent hole. The vent hole connects the interior space with an exterior of the load cell. The vent hole may be configured to equalize an air pressure in the interior space to an air pressure in the exterior of the load cell.

The need mentioned initially may also be met by a method of manufacturing a load cell as defined in claim 15. In order to create the gel element, a gel material as defined above may be poured onto the opening and/or the cover structure with the force transmitting element being located in the opening. The gel may be allowed to enter the opening, in particular the gap between the force transmitting element and the opening, and then be covered or solidified. Alternatively, a unitary gel element, which is already solidified, may be installed in the opening as a support for the force transmitting element. In this case, the gel element may be fastened to the remainder of the load cell, e.g. the cover structure, by at least one of a form fit, bonding, such as chemical or physical bonding, and gluing. In the following, the invention is described exemplarily with reference to the drawings and various embodiments.

In the following, elements that correspond to one another with respect to at least one of structure and function are provided with identical reference numerals.

In the drawings:
- Fig. 1: is a schematic representation of a load cell;
- Fig. 2: is a schematic representation of another load cell;
- Fig. 3: is a schematic representation of another load cell;
- Fig. 4: is a schematic representation of another load cell;
- Fig. 5: is a schematic perspective rendition of another load cell.

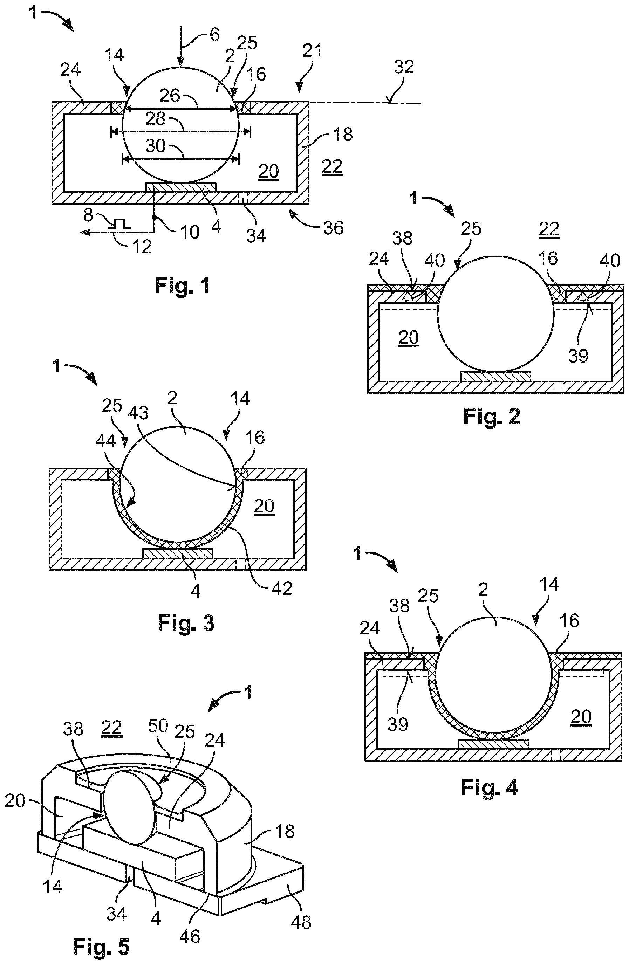

First, the general structure of a load cell 1 is explained with reference to Fig. 1. The load cell 1 comprises a force transmitting element 2, which is only depicted as a sphere for explanatory reasons. The force transmitting element 2 may have any shape, in particular a shape which is different from a sphere. For example, the force transmitting element 2 may be a cylinder. The force transmitting element may be made from a metal material, a ceramics material and/or a resin material.

The load cell 1 further comprises a force sensing element 4, which is configured to convert a force 6 which acts on the force transmitting element 2 into a measurement signal 8, which is representative of the force 6. The measurement signal 8 may be a digital signal or an analog signal and may be presented for output at a signal terminal 10 of the load cell 1 or output on a signal line 12. The signal line 10 may be wire-based or be configured to transmit the measurement signal 8 wirelessly.

The load cell 1 further comprises an opening 14, into which the force transmitting element 2 extends. The opening 14 is spaced apart from and located opposite the force sensing element 4. The force transmitting element 2 extends from the opening towards the force sensing element 4.

The load cell 1 further comprises a gel element 16.

In the opening 14, the force transmitting element 2 rests against the gel element 16. In particular, the gel element 16 may line the opening and surround the force transmitting element 2 preferably continuously. The gel element 16 may be electrically conductive or an electrical insulator.

The gel element 16 may adhere to the force transmitting element 2, e.g. by bonding, such as physical and/or chemical bonding, or by gluing. In Fig. 1, the gel element 16 is annular.

The force sensing element 4 may comprise a MEMS force transducer, which may include a membrane for measuring the force 6. The force sensing element 4 is preferably arranged exactly opposite the opening 14.

The load cell 1 comprises a cover 18 which may be part of a packaging 21. The packaging 21 may include the force sensing element 4 and any electrical connections, such as the signal terminal 10. The opening 14 is formed in the packaging 21.

The load cell 1 includes an interior space 20, which is, at least partly surrounded by the cover 18. The force transmitting element 2 extends through the opening 14 into the interior space 20. The interior space 20 separates the opening 14 from the force sensing element 4. The opening 14 may connect the interior space 20 to an exterior 22 of the load cell 1.

In the load cell of Fig. 1, the opening 14 is sealed by the force transmitting element 2 and the gel element 16, which are sealingly engaged.

The load cell 1 comprises a cover structure 24 which is configured to support or prop the gel element 16, particularly in and/or in the region of the opening 14. The cover structure 24 is part of the cover 18 and optionally the packaging 21. In particular, the cover structure 24 may be a monolithic part of the cover 18. The cover structure 24 may be located spaced apart and oriented parallel to the force sensing element 2, in particular a membrane thereof.

An opening may be provided both in the cover structure 24, or the cover 18 respectively, and in the gel element 16. In the following, the opening in the cover structure 24 and/or the packaging 21 is denoted by the reference numeral 14, the opening in the gel element 16 by reference numeral 25. The opening 25 in the gel element 16 may have a diameter 26 which is smaller than a diameter 28 of the opening 14 in the cover structure 24. Preferably, the openings 14, 25 in the gel element 16 and the cover structure 24 are coaxial.

The diameter 28 may be larger than the diameter 30 of the force transmitting element 2, in particular the maximum diameter of the force transmitting element 2 in a plane parallel to a plane 32 of the opening 14. The diameter 26 may be smaller than the diameter 30.

The load cell may have a vent hole 34 which connects the interior space 20 with the exterior 22. The vent hole may be on a side 36, the rear side of the load cell 1. Its location may vary. For example, it may be located underneath the force transmitting element 2 or spaced apart from it. The force transmitting element 2 is held moveably by the gel element 16. This movability may include several degrees of freedom and result from the elastic deformability of the gel element 16. The range of motion of the force transmitting element 2 is, however, preferably limited to prevent plastic deformation of the gel element 16.

In operation, the force 6 acting on the force transmitting element 2 is transmitted through the force transmitting element 2 to the force sensing element 4 and converted to the measurement signal 8. Vibrational movements and rebounds under sudden forces 6 of the force transmitting element 2 are dampened or even suppressed by the gel element 16. The force transmitting element 2 is held floatingly or in a semi-located manner in place and centered by the gel element 16. The gel element 16 is thus a structural component of the load cell 1 which ensures its structural integrity and absorbs internal forces that occur in operation.

The gel element 16 may be a separate, already solidified unitary piece that is fixed in place by being fastened to the cover structure 24, e.g. by gluing and/or a form fit. Alternatively, the gel element 16 may be an overmolded component that is applied in liquid form and solidified in place after the force transmitting element 2 has been mounted.

In Fig. 1 as well as in the other figures, the dimensions are not drawn to scale. Thus, the gel element 16 may have a larger or smaller material thickness as determined by the specific application. Moreover, the thickness of the gel element may not be constant but vary, in particular as a consequence of molding it in place.

Figs. 2 to 5 show other load cells 1. In the following, only those features are explained that differ from the load cell 1 of Fig. 1. If not explicitly mentioned otherwise, the structure and function of the load cells 1 of Figs. 2 to 5 thus correspond to that of Fig. 1 and, more generally, to the structures and functions mentioned in the general part of the description.

The load cell 1 of Fig. 2 comprises a gel element 16 which at least partly covers the cover structure 24. In particular, the gel element 16 may be arranged on a face 38, the front face, of the cover element 24, facing the exterior 22 and/or away from the interior space 20. In this embodiment, the gel element 16 is part of the outer surface of the load cell 1. Alternatively or cumulatively, the gel element 16 may be arranged on a rear face 39 of the cover structure 24, i.e. the face 39 that faces the interior space 20. This arrangement of the gel element 16 is indicated by the dotted lines.

The gel element 16 may be bonded to the front face 38, for example chemically and/or physically. A glue (not shown) may be used to mount the gel element 16 on the cover structure 24. Alternatively or cumulatively, the gel element 16 may be fastened to the cover structure 24 using a form fit, e.g. by using interlocking form fit elements 40, such as one or more undercut protrusions and matching receptacles on the gel element 16 and the cover structure 24. Again, the gel element 16 may be an originally separate element which has been fixed in place in an already solidified state, or it may be molded and solidified in place.

In Fig. 2, the connection between the gel element 16 and the cover structure 24 is strengthened as compared to the load cell 1 of Fig. 1. In addition, the sealing of the interior space 20 is improved.

The load cell 1 of Fig. 3 differs from the load cell 1 of Fig. 1 in that the gel element 16 is also arranged between the force transmitting element 2 and the force sensing element 4. More specifically, the gel element 16 extends from the opening 14 into the interior space 20 and further between the force transmitting element 2 and the force sensing element 4. The gel element 16 covers an area 43 of the force transmitting element 2, which area 43 is located in the interior space 20 or, equivalently, extends from the opening 14 in the cover structure 24 and/or the packaging 21 towards the force sensing element 4.

The gel element 16 may form a discontinuous or continuous layer 42 on the force transmitting element 2. It is preferred, however, that the gel element 16 forms a continuous layer 42 on the force transmitting element 2. The gel element 16 may adhere to the force transmitting element 2.

Preferably, the entire surface of the force transmitting element that is located in the interior space 20, i. e. in area 43, is covered by the gel element 16. The gel element 16 thus forms a seal which completely seals the opening 14 in the cover structure 24 and/or packaging 21, closing off the interior space 20 from the exterior 22. The gel element 16 in this case may be formed as a membrane.

As shown in Fig. 3, the gel element 16 may comprise a bulge 44 in which the force transmitting element 2 is received at least partly. The bulge 44 is open at the opening 25 through which the force transmitting element 2 may be received.

The load cell 1 of Fig. 4 shows exemplarily a combination of the features shown in the load cells of Figs. 2 and 3. The gel element 16 forms a membrane which covers the front face 38 of the cover structure 24. The gel element 16 further lines the opening 14 in the cover structure 24 and/or packaging 21, as with all the load cells of Fig. 1 to 3. The gel element 16 further extends into the interior space 20 of the load cell 1, where it covers the force transmitting element 2 completely.

The load cell 1 of Fig. 5 differs from the load cells 1 of Figs. 1 to 4 in the design of the cover 18. The cover 18 is a bell-shaped or pot-shaped unitary structure. The cover structure 24 is a platelike part of the cover 18, in which the opening 14 is formed. The cover 18 is at its end 46 sealingly connected to a substrate 48 on which the force sensing element 4 is fixed.

The substrate 48 and the cover 18 together enclose the interior space 20.

The gel element 16 in Fig. 5 is shaped as in Fig. 4 and thus seals the opening 14 against the exterior 22 of the load cell 1. The front face 38 of the load cell 1 is provided with an annular rim which protrudes from the cover 18 in a direction pointing away from the substrate 48 and/or away from the interior space 20. The protrusion 50 extends continuously around the opening 14, being spaced apart from the opening 14.

The protrusion 50 may serve as a centering aid, if the gel element 16 is a separate unit which is mounted to the remainder of the load cell 1 in a solidified state. If the gel element 16 is molded in place onto the remainder of the load cell 1, the protrusion 50 may serve as a border to contain the liquid gel before solidifying.

The load cell 1 as described above may not only be used for force or pressure measurements, but may also be used for other measurement purposes, depending on the configuration of the force sensing element 4. in addition to the the force sensing, the force sensing element 4 may be configured to issue a measurement signal 8 which is representative of another physical quantity than force, such as for example displacement or temperature.

### Reference Numerals

- 1: load cell
- 2: force transmitting element
- 4: force sensing element
- 6: force
- 8: measurement signal
- 10: signal terminal
- 12: signal line
- 14: opening
- 16: gel element
- 18: cover
- 20: interior space
- 21: packaging
- 22: exterior of load cell
- 24: cover structure
- 25: opening in the gel element
- 26: diameter of opening in gel element
- 28: diameter of opening in cover structure
- 30: diameter of force transmitting element
- 32: plane of opening
- 34: vent hole
- 36: (rear) side of load cell
- 38: front face of load cell
- 39: rear face of cover structure
- 40: interlocking form fit elements
- 42: layer
- 43: area
- 44: bulge
- 46: end of cover
- 48: substrate
- 50: protrusion

## Claims

1. Load cell (1) comprising:
a force transmitting element (2);
a force sensing element (4), the force sensing element being configured to convert a force (6) acting on the force transmitting element (2) into a measurement signal (8);
a cover (18) defining an interior space (20) in which the force sensing element (4) is located, wherein the cover (18) comprises a rigid cover structure (24) with an opening (14), the opening (14) being arranged opposite and spaced apart from the force sensing element (4) and the force transmitting element (2) extending through the opening (14) into the interior space (20) towards the force sensing element (4);
**characterized in that** the load cell (1) further comprises
a gel element (16) placed at least partially in the opening (14), wherein the force transmitting element (2) rests against the gel element (16) in the opening (14).

2. Load cell (1) according to claim 1, wherein the gel element (16) lines the opening (14).

3. Load cell (1) according to claim 1 or 2, wherein the gel element (16) seals the opening (14).

4. Load cell (1) according to any one of claims 1 to 3, wherein the gel element (16) is arranged between the force transmitting element (2) and the force sensing element (4).

5. Load cell (1) according to any one of claims 1 to 4, wherein the gel element (16) at least partly clads the force transmitting element (2) in an area (43) of the force transmitting element (2), which area is arranged between the opening (14) and the force sensing element (4).

6. Load cell (1) according to any one of claims 1 to 5, wherein the gel element (16) is at least partly formed as a membrane.

7. Load cell (1) according to any one of claims 1 to 6, wherein the gel element (16) comprises a bulge (44), in which the force transmitting element (2) is at least partly received.

8. Load cell (1) according to any one of claims 1 to 7, wherein the rigid cover structure (24) props the gel element (16), wherein the opening (14) extends through the cover structure.

9. Load cell (1) according to claim 8, wherein the gel element (16) at least partly covers the cover structure (24) on a face (38) of the cover side, which face faces away from the force sensing element (4).

10. Load cell (1) according to claim 8 or 9, wherein the gel element (16) adheres to the cover structure (24).

11. Load cell (1) according to any one of claims 8 to 10, wherein the opening (14) in the cover structure (24) has a diameter (28) that is larger than at least one of a diameter (26) of an opening (25) in the gel element (16) and larger than a diameter (30) of the force transmitting element (2).

12. Load cell (1) according to any one of claims 1 to 11, wherein the gel element (16) adheres to at least one of the force transmitting element (2) and the force sensing element (4).

13. Load cell (1) according to any one of claims 1 to 12, wherein the interior space (20) extends between the opening (14) and the force sensing element (4) and wherein the gel element (16) extends into the interior space (20).

14. Load cell (1) according to claim 13, wherein the gel element (16) separates the force transmitting element (2) from the interior space (20).

15. Method of manufacturing a load cell (1) according to any one of claims 1 to 14, wherein the gel element (16) is created by pouring a gel material onto the opening (14) with the force transmitting element (2) located in the opening (14) or wherein a unitary gel element (16) is installed in the opening (14) with the force transmitting element (2) located in the opening (14).

## Patentansprüche

1. Wägezelle (1) umfassend:
ein Kraftübertragungselement (2);
ein Kraftsensorelement (4), wobei das Kraftsensorelement so konfiguriert ist, dass es eine auf das Kraftübertragungselement (2) wirkende Kraft (6) in ein Messsignal (8) umwandelt;
eine Abdeckung (18), die einen Innenraum (20) definiert, in dem sich das Kraftsensorelement (4) befindet, wobei die Abdeckung (18) eine starre Abdeckstruktur (24) mit einer Öffnung (14) umfasst, wobei die Öffnung (14) gegenüber und beabstandet von dem Kraftsensorelement (4) angeordnet ist und sich das Kraftübertragungselement (2) durch die Öffnung (14) in den Innenraum (20) zum Kraftsensorelement (4) hin erstreckt;
**dadurch gekennzeichnet, dass die Wägezelle (1) ferner umfasst**
ein Gelelement (16), das zumindest teilweise in der Öffnung (14) angeordnet ist, wobei das Kraftübertragungselement (2) an dem Gelelement (16) in der Öffnung (14) anliegt.

2. Wägezelle (1) nach Anspruch 1, wobei das Gelelement (16) die Öffnung (14) auskleidet.

3. Wägezelle (1) nach Anspruch 1 oder 2, wobei das Gelelement (16) die Öffnung (14) abdichtet.

4. Wägezelle (1) nach einem der Ansprüche 1 bis 3, wobei das Gelelement (16) zwischen dem Kraftübertragungselement (2) und dem Kraftsensorelement (4) angeordnet ist.

5. Wägezelle (1) nach einem der Ansprüche 1 bis 4, wobei das Gelelement (16) das Kraftübertragungselement (2) in einem Bereich (43) des Kraftübertragungselementes (2), der zwischen der Öffnung (14) und dem Kraftsensorelement (4) angeordnet ist, zumindest teilweise ummantelt.

6. Wägezelle (1) nach einem der Ansprüche 1 bis 5, wobei das Gelelement (16) zumindest teilweise als Membran ausgebildet ist.

7. Wägezelle (1) nach einem der Ansprüche 1 bis 6, wobei das Gelelement (16) eine Ausbuchtung (44) aufweist, in der das Kraftübertragungselement (2) zumindest teilweise aufgenommen ist.

8. Wägezelle (1) nach einem der Ansprüche 1 bis 7, wobei die starre Abdeckstruktur (24) das Gelelement (16) stützt, wobei sich die Öffnung (14) durch die Abdeckstruktur erstreckt.

9. Wägezelle (1) nach Anspruch 8, wobei das Gelelement (16) die Abdeckstruktur (24) auf einer dem Kraftsensorelement (4) abgewandten Fläche (38) der Abdeckseite zumindest teilweise bedeckt.

10. Wägezelle (1) nach Anspruch 8 oder 9, wobei das Gelelement (16) an der Abdeckstruktur (24) haftet.

11. Wägezelle (1) nach einem der Ansprüche 8 bis 10, wobei die Öffnung (14) in der Abdeckstruktur (24) einen Durchmesser (28) aufweist, der größer ist als mindestens einer der Durchmesser (26) einer Öffnung (25) im Gelelement (16) und größer als ein Durchmesser (30) des Kraftübertragungselements (2).

12. Wägezelle (1) nach einem der Ansprüche 1 bis 11, wobei das Gelelement (16) an mindestens einem von dem Kraftübertragungselement (2) und dem Kraftsensorelement (4) haftet.

13. Wägezelle (1) nach einem der Ansprüche 1 bis 12, wobei sich der Innenraum (20) zwischen der Öffnung (14) und dem Kraftsensorelement (4) erstreckt und wobei sich das Gelelement (16) in den Innenraum (20) erstreckt.

14. Wägezelle (1) nach Anspruch 13, wobei das Gelelement (16) das Kraftübertragungselement (2) vom Innenraum (20) trennt.

15. Verfahren zur Herstellung einer Wägezelle (1) nach einem der Ansprüche 1 bis 14, wobei das Gelelement (16) durch Aufgießen eines Gelmaterials auf die Öffnung (14) mit dem in der Öffnung (14) befindlichen Kraftübertragungselement (2) erzeugt wird oder wobei ein einteiliges Gelelement (16) in die Öffnung (14) mit dem in der Öffnung (14) befindlichen Kraftübertragungselement (2) eingebaut wird.

## Revendications

1. Cellule de charge (1) comprenant :
un élément de transmission de force (2),
un élément de détection de force (4), l'élément de détection de force étant configuré pour convertir une force (6) agissant sur l'élément de transmission de force (2) en un signal de mesure (8),
un capot (18) définissant un espace intérieur (20) dans lequel est situé l'élément de détection de force (4), le capot (18) comprenant une structure de couverture rigide (28) comportant une ouverture (14), l'ouverture (14) étant disposée à l'opposé et espacée de l'élément de transmission de force (2) s'étendant au travers de l'ouverture (14) dans l'espace intérieur (20) en direction de l'élément de détection de force (4),
**caractérisé en ce que** la cellule de charge (1) comprend en outre un élément de gel (16) placé au moins partiellement dans l'ouverture (14), l'élément de transmission de force (2) reposant contre l'élément de gel (16) dans l'ouverture (14) .

2. Cellule de charge (1) selon la revendication 1, dans laquelle l'élément de gel (16) s'aligne sur l'ouverture (14).

3. Cellule de charge (1) selon la revendication 1 ou la revendication 2, dans laquelle l'élément de gel (16) rend étanche l'ouverture (14).

4. Cellule de charge (1) selon l'une quelconque des revendications 1 à 3, dans laquelle l'élément de gel (16) est disposé entre l'élément de transmission de force (2) et l'élément de détection de force (4).

5. Cellule de charge (1) selon l'une quelconque des revendications 1 à 4, dans laquelle l'élément de gel (16) recouvrant au moins partiellement l'élément de transmission de force (2) dans une zone (43) occupée par l'élément de transmission de force (2), ladite zone étant disposée entre l'ouverture (14) et l'élément de détection de force (4).

6. Cellule de charge (1) selon l'une quelconque des revendications 1 à 5, dans laquelle l'élément de gel (16) et au moins partiellement formé comme une membrane.

7. Cellule de charge (1) selon l'une quelconque des revendications 1 à 6, dans laquelle l'élément de gel (16) comprend un renflement (44) dans lequel est au moins partiellement reçu l'élément de transmission de force (2).

8. Cellule de charge (1) selon l'une quelconque des revendications 1 à 7, dans laquelle la structure de couverture rigide (24) supporte l'élément de gel (16), l'ouverture (14) s'étendant au travers de la structure de couverture.

9. Cellule de charge (1) selon la revendication 8, dans laquelle l'élément de gel (16) recouvre au moins partiellement la structure de couverture (24) sur une face (38) du côté du capot qui fait face à distance de l'élément de détection de force (4).

10. Cellule de charge (1) selon la revendication 8 ou la revendication 9, dans laquelle l'élément de gel (16) adhère à la structure de couverture (24).

11. Cellule de charge (1) selon l'une quelconque des revendications 8 à 10, dans laquelle l'ouverture (14) dans la structure de couverture (24) présente un diamètre (28) qui est plus grand qu'au moins l'un parmi le diamètre (26) d'une ouverture (25) dans l'élément de gel (16) et plus grand que le diamètre (30) de l'élément de transmission de force (2) .

12. Cellule de charge (1) selon l'une quelconque des revendications 1 à 11, dans laquelle l'élément de gel (16) adhère à au moins l'un de l'élément de transmission de force (2) et de l'élément de détection de force (4).

13. Cellule de charge (1) selon l'une quelconque des revendications 1 à 12, dans laquelle l'espace intérieur (20) s'étend entre l'ouverture (14) et l'élément de détection de force (4), et dans laquelle l'élément de gel (16) s'étend dans l'espace intérieur (20).

14. Cellule de charge (1) selon la revendication 13, dans laquelle l'élément de gel (16) sépare l'élément de transmission de force (2) de l'espace intérieur (20).

15. Procédé de fabrication d'une cellule de charge (1) conforme à l'une quelconque des revendications 1 à 14, dans lequel l'élément de gel (16) est créé en injectant un matériau de gel sur l'ouverture (14) alors que l'élément de transmission de force (2) est situé dans l'ouverture (14), ou bien dans lequel un élément de gel élémentaire (16) est installé dans l'ouverture (14) alors que l'élément de transmission de force (2) est situé dans l'ouverture (14).
